# EUROPEAN PATENT APPLICATION

(11) **EP 4 545 220 A1**
(43) Date of publication of application: **30.04.2025**
(21) Application number: 24207592.7
(22) Date of filing: 18.10.2024
(51) Int. Cl.: B22F 10/28, B22F 10/85, B33Y 10/00, B33Y 50/02

(54) **LOCATION-SPECIFIC PROBABILISTIC APPROACH FOR PREDICTION OF DEFECT FORMATION IN ADDITIVE MANUFACTURING**

(30) Priority: 23.10.2023 US 202318492078
(71) Applicant: RTX Corporation, Farmington, CT 06032 (US)
(72) Inventor: ANAHID, Masoud, Farmington, 06032 (US); BURLATSKY, Sergei F., Farmington, 06032 (US); FURRER, David U., Farmington, 06032 (US); ROELOFS, Andreas Karl, Farmington, 06032 (US)
(74) Representative: Dehns

(57) **Abstract**

A method (34) for location-specific probabilistic prediction of formation of a defect in powder bed fusion additive manufacturing of an article (26) includes determining first statistical distributions of multiple process parameters selected from laser power, scan speed, laser spot size, and powder layer thickness and density, based on the first statistical distributions, for locations across the article (26), determining second statistical distributions of a threshold temperature (Tₜₕᵣₑₛₕ) for formation of the defect at each of the locations, determining a cumulative temperature thermal history (T₀) at each of the locations across the article (26), for each of the locations across the article (26), determining a probability of formation of the defect based upon a probability of Tₜₕᵣₑₛₕ versus T₀, and from the probability of formation of the defect at each of the locations, generating an article integrity map.

## Description

### TECHNICAL FIELD

The present disclosure relates to powder bed fusion additive manufacturing, and particularly to methods and systems for location-specific probabilistic prediction of formation of a defect in powder bed fusion additive manufacturing of an article.

### BACKGROUND

Powder bed fusion additive manufacturing (PBFAM) is a process that is utilized to create components by applying sequential material layers, with each layer being applied to the previous material layer. There are multiple different parameters that can affect whether an end product created using the additive manufacturing process includes flaws, or is within acceptable tolerances. Typically, components created using an additive manufacturing process are designed iteratively, by running a modeling simulation, examining the results to determine if the results have a required quality, adjusting one or more parameters if the results are not acceptable, running another modeling simulation iteration with the adjusted parameters, and repeating this process until a complete set of parameter is acquired that results in a build of acceptable quality.

In PBFAM, despite using optimal settings, however, defects occur from the diverse sources of variation. Such variations may be from, but are not limited to, variations of beam spot size across the build plate due to beam quality, focal length, and optical system imperfections, defocusing of laser beam due to laser-plume interaction, variation of scan speed at the end and beginning of scan vectors due to acceleration or deceleration of the scanning mechanism, and local variation of layer thickness and density due to recoater error, feedstock powder size distribution, landing spatters, or balling in the prior layer. Additionally, the probabilistic dispersion of a process parameter around its target value can depend on the magnitude of that parameter itself, as well as other interrelated process parameters. For instance, when using a high laser power, the dispersion in spot size could be wider than for a lower laser power, but lower laser power can increase the likelihood of balling, leading to larger variation in layer thickness in the subsequent layer.

### SUMMARY

A method for location-specific probabilistic prediction of formation of a defect in powder bed fusion additive manufacturing of an article according to an aspect of the present invention includes determining first statistical distributions of multiple process parameters selected from laser power, scan speed, laser spot size, and powder layer thickness and density based on the first statistical distributions; determining second statistical distributions of a threshold temperature (Tₜₕᵣₑₛₕ) for formation of the defect at each of the locations; determining a cumulative temperature thermal history (T₀) at each of the locations across the article; and determining a probability of formation of the defect based upon a probability of Tₜₕᵣₑₛₕ versus T₀. From the probability of formation of the defect at each of the locations, an article integrity map is generated.

In an embodiment of the foregoing embodiment, the determining of the first statistical distributions is calculated from in-situ measurement of the additive manufacturing of a single track/stripe of powder using at least one of photodiodes, infrared thermography, calorimetry, optical imaging, and acoustic imaging.

In a further embodiment of any of the foregoing embodiments, the determining of the first statistical distributions includes additively manufacturing a specimen that is different from the article or a single track of powder, measuring defects in the specimen or the single track to generate an experimental location specific defect volume, simulating an additive manufacturing of the specimen or the single track based on assumed first statistical distributions to generate a simulated location specific defect volume, comparing the simulated location specific defect volume to the experimental location specific defect volume to determine an error, if the error is outside of a desired tolerance iteratively adjusting the assumed first statistical distributions and re-simulating the additive manufacturing until the error is within the desired tolerance, and once the error is within the desired tolerance using the adjusted assumed first statistical distributions as the first statistical distributions for determining the second statistical distributions.

A further embodiment of any of the foregoing embodiments includes classifying an expected magnitude of the second statistical distributions to have a classification that is small, large, or intermediate, and then selecting a determination scheme for determining the second statistical distributions in accordance with the classification.

In a further embodiment of any of the foregoing embodiments, when the classification is small, using a Taylor series expansion to determine the second statistical distributions as linear functions of the selected multiple process parameters.

In a further embodiment of any of the foregoing embodiments, the classification is large, using an analytical approach to determine the second statistical distributions.

In a further embodiment of any of the foregoing embodiments, the classification is intermediate, using an analytical interpolation to determine the second statistical distributions.

A further embodiment of any of the foregoing embodiments includes generating the article integrity map for each of a plurality of additive manufacturing machines in order to characterize a manufacturing quality capability of each of the additive manufacturing machines.

In a further embodiment of any of the foregoing embodiments, the defect is a keyhole defect, and the probability of formation of the defect is based upon a probability of Tₜₕᵣₑₛₕ being less than T₀.

In a further embodiment of any of the foregoing embodiments, the defect is a lack of fusion defect, and the probability of formation of the defect is based upon a probability of Tₜₕᵣₑₛₕ being greater than T₀.

A system according to an aspect of the present invention includes a computer-readable storage device having a program with a set of instructions executable to perform the following steps as set forth in any of the foregoing embodiments.

In a further embodiment of any of the foregoing embodiments, the determining of the first statistical distributions is calculated from in-situ measurement of the additive manufacturing of a single track/stripe of powder using at least one of photodiodes, infrared thermography, calorimetry, optical imaging, and acoustic imaging.

In a further embodiment of any of the foregoing embodiments, the determining of the first statistical distributions includes additively manufacturing a specimen that is different from the article or a single track of powder, measuring defects in the specimen or the single track to generate an experimental location specific defect volume, simulating an additive manufacturing of the specimen or the single track based on assumed first statistical distributions to generate a simulated location specific defect volume, comparing the simulated location specific defect volume to the experimental location specific defect volume to determine an error, if the error is outside of a desired tolerance iteratively adjusting the assumed first statistical distributions and re-simulating the additive manufacturing until the error is within the desired tolerance, and once the error is within the desired tolerance using the adjusted assumed first statistical distributions as the first statistical distributions for determining the second statistical distributions.

A further embodiment of any of the foregoing embodiments includes classifying an expected magnitude of the second statistical distributions to have a classification that is small, large, or intermediate, and then selecting a determination scheme for determining the second statistical distributions in accordance with the classification.

In a further embodiment of any of the foregoing embodiments, when the classification is small, using a Taylor series expansion to determine the second statistical distributions as linear functions of the selected multiple process parameters.

In a further embodiment of any of the foregoing embodiments, when the classification is large, using an analytical approach to determine the second statistical distributions.

In a further embodiment of any of the foregoing embodiments, wherein, when the classification is intermediate, using an analytical interpolation to determine the second statistical distributions.

A further embodiment of any of the foregoing embodiments includes generating the article integrity map for each of a plurality of additive manufacturing machines in order to characterize a manufacturing quality capability of each of the additive manufacturing machines.

In a further embodiment of any of the foregoing embodiments, the defect is a keyhole defect, and the probability of formation of the defect is based upon a probability of Tₜₕᵣₑₛₕ being less than T₀.

In a further embodiment of any of the foregoing embodiments, the defect is a lack of fusion defect, and the probability of formation of the defect is based upon a probability of Tₜₕᵣₑₛₕ being greater than T₀.

The present disclosure may include any one or more of the individual features disclosed above and/or below alone or in any combination thereof.

### BRIEF DESCRIPTION OF THE DRAWINGS

The various features and advantages of the present disclosure will become apparent to those skilled in the art from the following detailed description. The drawings that accompany the detailed description can be briefly described as follows.
Figure 1 illustrates an additive manufacturing machine system.
Figure 2 illustrates a method for location-specific probabilistic prediction of formation of a defect in powder bed fusion additive manufacturing.
Figure 3 illustrates a scheme for calculating statistical distributions of process parameters.
Figure 4 illustrates determination of a magnitude of statistical distributions.
Figure 5 illustrates determination of a large magnitude classification of statistical distribution.
Figure 6 illustrates product integrity defect map.
Figure 7 illustrates location specific product integrity defect maps for several locations in an article

In this disclosure, like reference numerals designate like elements where appropriate and reference numerals with the addition of one-hundred or multiples thereof designate modified elements that are understood to incorporate the same features and benefits of the corresponding elements. Terms such as "first" and "second" used herein are to differentiate that there are two architecturally distinct components or features. Furthermore, the terms "first" and "second" are interchangeable in that a first component or feature could alternatively be termed as the second component or feature, and vice versa.

### DETAILED DESCRIPTION

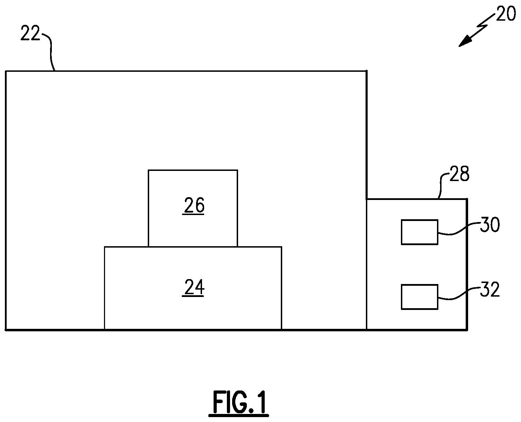

Figure 1 schematically illustrates an additive manufacturing machine system 20, such as a laser powder bed fusion additive manufacturing (PBFAM) machine. The system 20 includes a manufacturing chamber 22 with a platform 24 upon which an article 26 (e.g., a turbine engine component) is additively manufactured from a powderized metallic alloy. A controller 28 is connected to the chamber 22 and controls the additive manufacturing process according to any known additive manufacturing control system. As will be appreciated, this disclosure is not limited to particular articles or particular additive manufacturing configurations.

The controller 28 includes at least one processor 30 and at least one computer-readable storage device 32 (memory 32). In this regard, the at least one processor 30 may include multiple processors, one or more of which may be located in a device other than the controller 28, and the at least one memory 32 may include multiple memories, one or more of which may be located in a device other than the controller 28. The at least one memory 32 may receive and store executable instructions according to the examples described herein, which are received and executed by the at least one processor 30 to define a sequence of the additive manufacturing and control of process parameters, such as but not limited to, laser power, scan speed, laser spot size, scan track, and track spacing. The instructions specify operational conditions for one or more steps in an additive manufacturing process (i.e., a build), which may be applicable to an actual build or a computerized modeled simulation of a build. The controller 28 can, in some examples, include user interface devices such as a keyboard and a display screen.

Additive manufacturing can produce extrinsic processing-related material features (often called defects, as they are unwanted) that can impact performance and durability of the article produced. The ability to understand and define the local probability of such defect formation throughout the volume of the article can greatly support the engineering design and analysis process relative to final article capabilities, performance, and overall life limits. In this regard, the examples herein demonstrate a methodology for prediction of the probability of occurrence of specific types of defects within fusion joining and additive processes on a location-specific, path-dependent basis. Combining these results with currently available probabilistic lifing methods (e.g., DARWIN), engineers can accurately and effectively define component end-use performance and facilitate design optimization to achieve targeted goals. This methodology enables a shift from a single deterministic value with a single dispersion of properties to a capability of having location-specific properties with local dispersions that are captured in a probabilistic manner. For example, keyhole type defects and lack of fusion type defects are probabilistically predicted, but the methodology can also be applied to other defect types. A keyhole defect refers to the creation of potentially unstable melt pool shapes during the build, while lack of fusion defects refer to residual amounts of unmelted/unfused powder material within the article.

In PBFAM, defects can occur despite use of "optimized" process parameters. Moreover, a statistical distribution in a process parameter around its target value can depend on the magnitude of that parameter itself, as well as other process parameters that are interrelated. In this regard, the methodology herein provides an analytical model-based approach to calculate location specific defect concentration and the probability of defect formation for parts manufactured by PBFAM. For example, the inputs to the model include (1) statistical variations of process parameters, including laser power, scan speed, spot size and powder layer thickness and density, (2) other build parameters with no significant dispersion, such as track spacing and build plate temperature, (3) article geometry, and (4) scan path. The outputs from the model are different product integrity maps, which may include (1) probability of defect formation map, (2) volumetric defect density map, (3) location specific process map for probability of defect formation, or (4) location specific process map for volumetric defect density.

The examples herein are based upon two particular types of defects, including keyhole porosity defects and lack of fusion defects, and are based on a deterministic defect prediction model that enables predictions regarding the formation of defects at any specific location in the article. It is to be understood that this disclosure is not limited to a particular additive manufacturing process and, while the specifically enumerated process parameters are parameters of a laser powder bed fusion additive manufacturing process, one of ordinary skill in the art having the benefit of this disclosure will understand that similar parameters related to any given additive manufacturing process could be utilized instead of, or in addition to, the enumerated parameters, and one of ordinary skill in the art, having the benefit of this disclosure, would be capable of ascertaining the relevant parameters for an alternative additive manufacturing process and system.

The predictive model takes into account a defined set of target process parameters. By comparing the local temperature build-up derived from a location specific cumulative thermal history of the process (*T*₀) with a threshold temperature (Tₜₕᵣₑₛₕ) for defect formation, the model determines whether a defect at the location is likely to form or not. There are two separate threshold temperatures for keyhole and lack of fusion defect formation which have functional dependencies on the process parameters. A keyhole defect is predicted deterministically if *T*₀ > *Tₖₕ,* where *Tₖₕ* is the threshold temperature for keyhole defect formation. A lack of fusion defect is predicted deterministically if *T*₀ *< T_{LoF},* where *T_{LoF}* is the threshold temperature for lack of fusion defect formation.

First statistical distributions around the target values of the process parameters of a build account for variations and uncertainties in the process parameters. Statistical distributions are calculated for *Tₖₕ* and *T_{LoF}* by considering the variability in laser power, scan speed, spot size, and powder layer thickness and density around their respective target values. The probability of keyhole defect formation is equivalent to the probability of *Tₖₕ* being less than *T*₀, while the probability of lack of fusion defect formation is equivalent to the probability of *T_{LoF}* being greater than *T*₀. In the context of build path, it is assumed that the fluctuation of process parameters does not affect *T*₀. This assumption allows for consistent analysis of defect formation probabilities without considering the influence of process parameter variation on the temperature build-up along the build path.

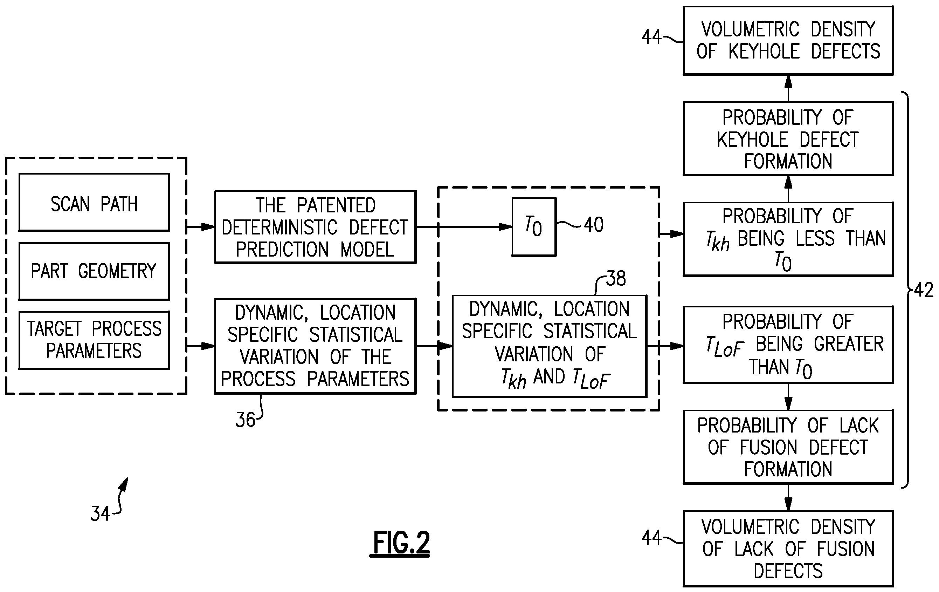

The statistical variation of process parameters are inherently dynamic in nature. This is attributed to the continuous evolution of the scan path, geometry, and local conditions as the part is constructed. As a result, the statistical variation of Tₖₕ and T_{LoF} experiences ongoing changes, leading to a shifting landscape of targeted process parameters and their associated variations across different locations. Figure 2 shows a flow chart of a method 34 for location-specific probabilistic prediction of formation of a defect in powder bed fusion additive manufacturing including the intricate relationship between input parameters, their dispersion, and the evolving statistical variation of the threshold temperatures. For example, at 36 first dynamic, location specific statistical distributions are determined for multiple process parameters selected from laser power, scan speed, laser spot size, and powder layer thickness and density. Examples of this determination will be described in more detail later on below. At 38, based on the first statistical distributions, for locations across the article, second statistical distributions are determined of a threshold temperature (Tₜₕᵣₑₛₕ) for formation of the defect at each of the locations (i.e., Tₖₕ for keyhole or T_{LoF} for lack of fusion). For example, the first and second statistical distributions take into account a predetermined scan path, the geometry of the article, and the target process parameters. At 40, a cumulative temperature thermal history (T₀) is determined at each of the locations across the article. For instance, the cumulative temperature thermal history (T₀) is determined from a known deterministic defect prediction model. Then at 42, for each of the locations across the article, a probability of formation of the defect is determined based upon a probability of Tₜₕᵣₑₛₕ versus T₀. For example, where the defect is a keyhole defect, and the probability of formation of the defect is based upon a probability of Tₜₕᵣₑₛₕ being less than T₀, and where the defect is a lack of fusion defect, and the probability of formation of the defect is based upon a probability of Tₜₕᵣₑₛₕ being greater than T₀. Finally, at 44, an article integrity map is generated from the probability of formation of the defect at each of the locations, such as from a volumetric density of the defects.

Within the method, there are several possible approaches to determining the first statistical distributions, including an experimental scheme and an experimental/modeling scheme. In the experimental scheme, the first statistical distributions are calculated from in-situ measurement of the additive manufacturing of a single track/stripe of powder using at least one of photodiodes, infrared thermography, calorimetry, optical imaging, and acoustic imaging. For example, single tracks are additively manufactured with different combinations of laser power, scan speed, spot size, and powder layer thickness and density and then statistical distributions are calculated from the experimentally collected data.

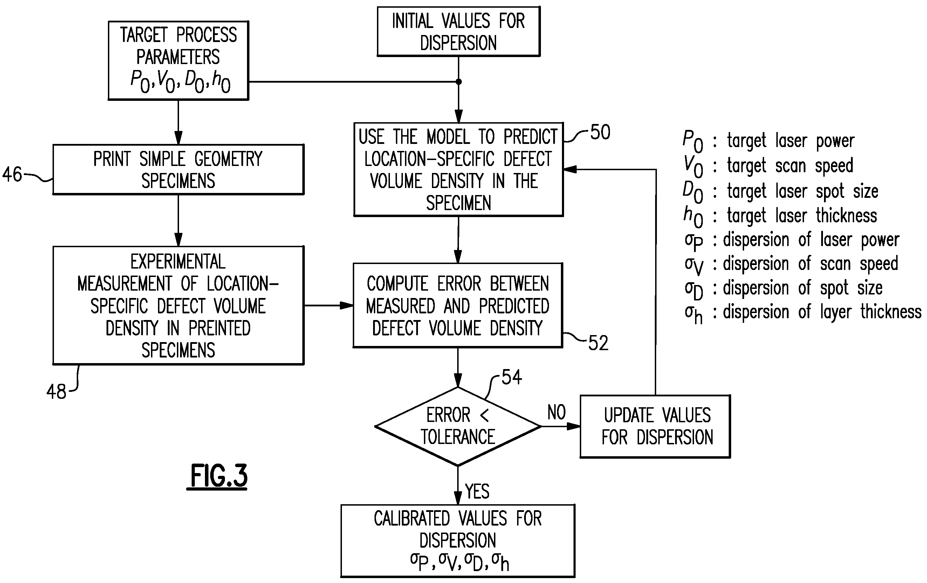

The experimental/modeling scheme is represented in Figure 3 and at 46 involves additively manufacturing either 1) a specimen that is different from the article or 2) a single track of powder based on target process parameters. At 48, defects in the specimen or the single track are measured, such as by use of X-ray CT scanning, ultrasonic testing, or metallography, to generate an experimental location specific defect volume. At 50, an additive manufacturing of the specimen or the single track is simulated based on assumed initial values for the first statistical distributions to generate a simulated location specific defect volume. At 52, the simulated location specific defect volume is compared to the experimental location specific defect volume to determine an error. As shown at 54, if the error is outside of a desired tolerance, the assumed first statistical distributions are iteratively adjusted and re-simulated until the error is within the desired tolerance. Once the error is within the desired tolerance, the adjusted assumed first statistical distributions are used in the method as the first statistical distributions above in 36 for determining the second statistical distributions.

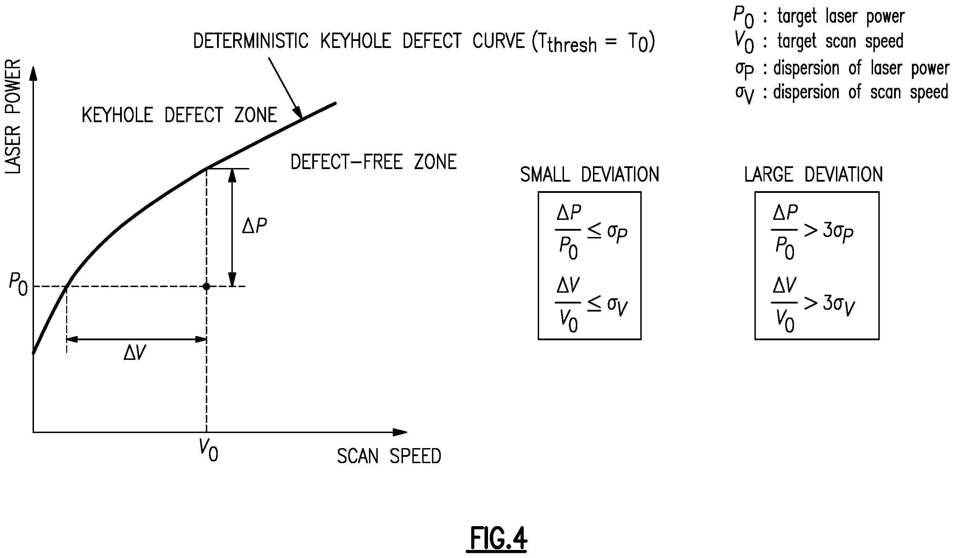

In further examples, the determination of the second statistical distributions is classified according to their expected magnitude in order to select an appropriate determination scheme. For example, an expected magnitude of each of the second statistical distributions is characterized to have a classification that is small, large, or intermediate. The process for determining whether the statistical distribution follows a small, intermediate, or large deviation scheme involves several steps. Firstly, the defect boundary surface is obtained from a known deterministic defect prediction model. This surface represents the boundary between defect-free and defect zones. It corresponds to the combinations of process parameters (e.g., laser power, scan speed, laser spot size, and powder layer thickness and density) which satisfy the condition that Tₜₕᵣₑₛₕ = T₀. Next, the process calculates the distance between each target process parameter and the defect boundary surface, assuming all other parameters remain constant. For instance, it computes the distance of the target laser power from the defect boundary surface while keeping scan speed, spot size, and layer thickness constant. Then, this distance is normalized by the value of the parameter. If the normalized value falls below one standard deviation for all process parameters, it's categorized as a small deviation. Conversely, if all the normalized distance parameters exceed three times the standard deviation, it's classified as a large deviation. If neither of these conditions holds true, it is considered an intermediate deviation. To provide a visual representation of the process, Figure 4 illustrates the steps for a simple case where the only variables considered are laser power and scan speed and the defect of interest is keyhole porosity. A determination scheme for determining the second statistical distributions is then selected in accordance with the classification. For instance, when the classification is small, a Taylor series expansion is used to determine the second statistical distributions as linear functions of the selected multiple process parameters; when the classification is large, an analytical approach is used to determine the second statistical distributions; and when the classification is intermediate, an analytical interpolation is used to determine the second statistical distributions.

### WORKING EXAMPLES

For the small classification scheme, the statistical distributions of Tₖₕ and T_{LoF} are simplified by employing Taylor series expansion around the target process parameters. This approach allows Tₖₕ and T_{LoF} to be approximated as linear functions of the process parameters, providing a closed-form analytical expression for the second statistical distributions. In this case, if the process parameters follow a normal distribution, it follows that Tₖₕ and T_{LoF} will also exhibit normal distributions. This statistical characteristic ensures that the probability distributions of defect formation align with the underlying variations in the process parameters.

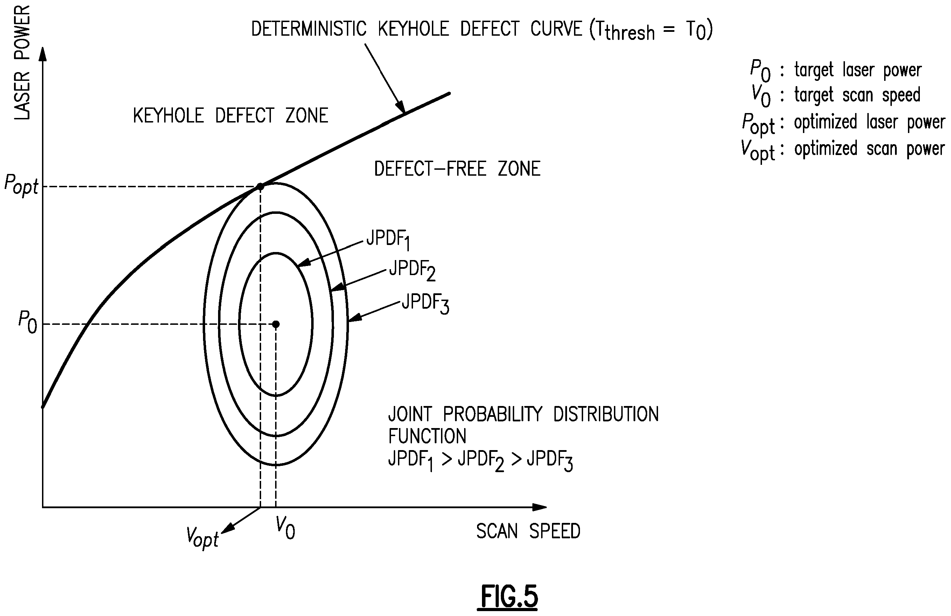

For the large classification scheme, a systematic methodology is employed to obtain an analytical expression for the second statistical distributions. Initially, optimal fluctuation approach along with an optimization technique, such as the Lagrange multiplier method, are harnessed to maximize the joint probability distribution function of laser power, scan speed, spot size, and powder layer thickness and density while ensuring that threshold temperature (Tₜₕᵣₑₛₕ) remains equal to the cumulative temperature thermal history (T₀). Once this optimized set of laser power, scan speed, spot size, and powder layer thickness and density is determined, a Taylor series expansion is crafted around these values. This expansion can encompass both linear and second-order terms, facilitating a comprehensive characterization of the probability distribution function for Tₜₕᵣₑₛₕ in terms of its underlying variables. To provide a visual representation of the process, Figure 5 illustrates the steps for a simple case where the only variables considered are laser power and scan speed and the defect of interest is keyhole porosity.

For the intermediate classification scheme, an interpolation approach is employed to obtain an analytical expression for the second statistical distributions. This allows for the formulation of a mathematical framework that smoothly transitions between the analytical functions used in the small and large classification cases.

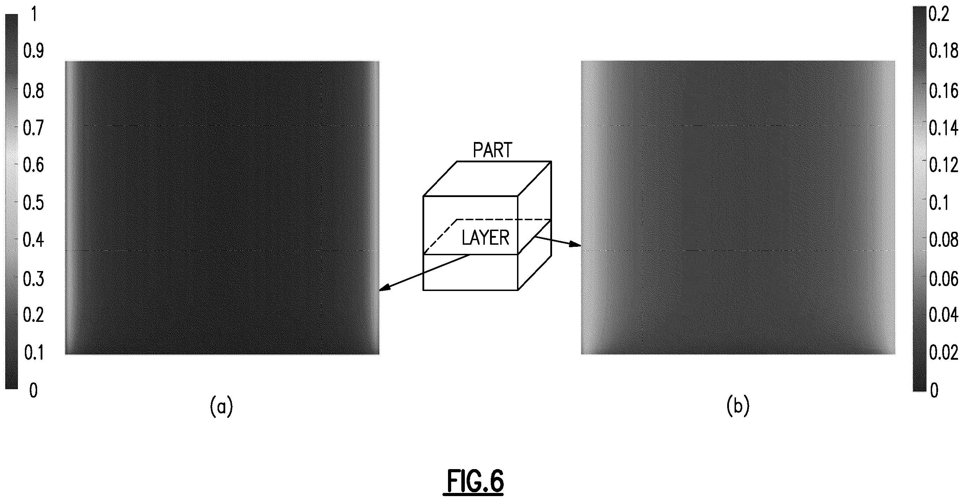

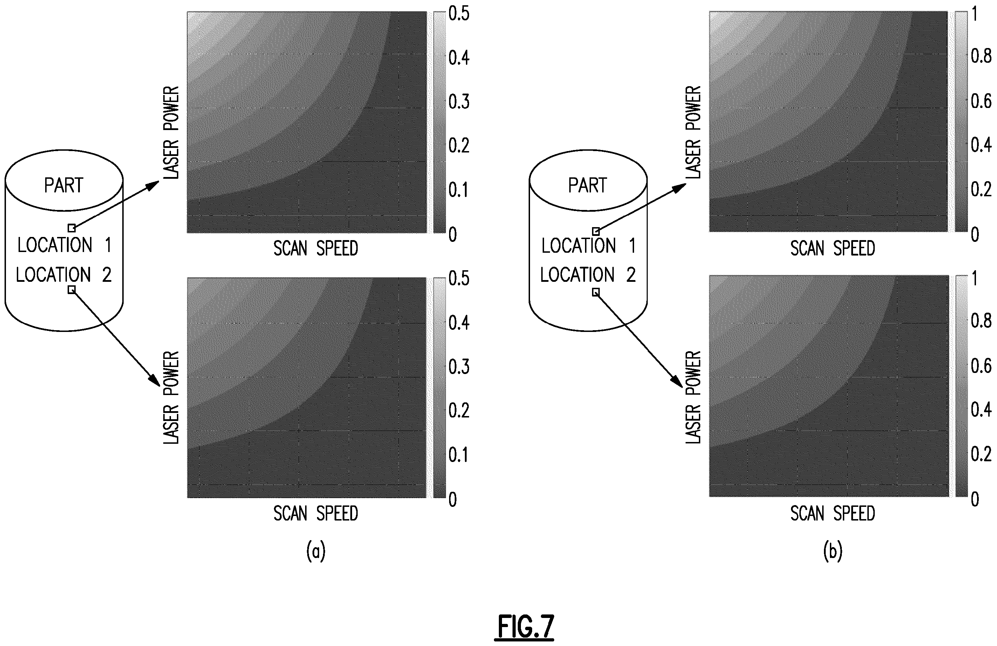

A probability of formation of the defect is determined based upon a probability of Tₜₕᵣₑₛₕ versus T₀. One or more article integrity maps are then generated from the probability of formation of the defect at each of the locations. As indicated above, a product integrity map can include (1) a probability of defect formation map, (2) a volumetric defect density map, (3) a location specific process map for probability of defect formation as a function of laser power and scan speed, or (4) a location specific process map for volumetric defect density as a function of laser power and scan speed. For example, Figure 6(a) illustrates a probability of defect formation contour map for a given layer in an article in which there are higher probabilities of defects at the edges of the article, and Figure 6(b) illustrates a volumetric defect density contour map in which there are higher densities of defects at the edges of the article. Figure 7(a) illustrates a location specific process contour map of two locations for probability of defect formation in which there are higher probabilities of defects for a combination of higher laser power and lower scan speed and Figure 7(b) illustrates a location specific process contour map for volumetric defect density in which there are higher densities of defects for a combination of higher laser power and lower scan speed.

In further examples, article integrity maps are used to assess the capability of additive manufacturing machines. For instance, the variations in the process parameters differ from one machine to the next, between machines of the same model/brand (but different serial numbers) or between machines of different models/brands. Thus, articles of the same design that are produced with nominally equal process parameters on two machines that are nominally the same may actually differ in quality due to the unique variations of each machine. In this regard, the article integrity maps are used to characterize the manufacturing quality capability of each of the machines, based on the particular variations in that machine. Subsequently, the maps can be taken into account in predicting the performance and durability of articles produced by the particular machine.

Although a combination of features is shown in the illustrated examples, not all of them need to be combined to realize the benefits of various embodiments of this disclosure. In other words, a system designed according to an embodiment of this disclosure will not necessarily include all of the features shown in any one of the Figures or all of the portions schematically shown in the Figures. Moreover, selected features of one example embodiment may be combined with selected features of other example embodiments.

The preceding description is exemplary rather than limiting in nature. Variations and modifications to the disclosed examples may become apparent to those skilled in the art that do not necessarily depart from this disclosure. The scope of legal protection given to this disclosure can only be determined by studying the following claims.

## Claims

1. A method (34) for location-specific probabilistic prediction of formation of a defect in powder bed fusion additive manufacturing of an article (26), the method comprising:
determining first statistical distributions of multiple process parameters selected from laser power, scan speed, laser spot size, and powder layer thickness and density;
based on the first statistical distributions, for locations across the article (26), determining second statistical distributions of a threshold temperature (Tₜₕᵣₑₛₕ) for formation of the defect at each of the locations;
determining a cumulative temperature thermal history (T₀) at each of the locations across the article (26);
for each of the locations across the article (26), determining a probability of formation of the defect based upon a probability of Tₜₕᵣₑₛₕ versus T₀; and
from the probability of formation of the defect at each of the locations, generating an article integrity map.

2. The method as recited in claim 1, wherein the determining of the first statistical distributions is calculated from in-situ measurement of the additive manufacturing of a single track/stripe of powder using at least one of photodiodes, infrared thermography, calorimetry, optical imaging, and acoustic imaging.

3. The method as recited in claim 1 or 2, wherein the determining of the first statistical distributions includes additively manufacturing a specimen that is different from the article (26) or a single track of powder, measuring defects in the specimen or the single track to generate an experimental location specific defect volume, simulating an additive manufacturing of the specimen or the single track based on assumed first statistical distributions to generate a simulated location specific defect volume, comparing the simulated location specific defect volume to the experimental location specific defect volume to determine an error, if the error is outside of a desired tolerance iteratively adjusting the assumed first statistical distributions and re-simulating the additive manufacturing until the error is within the desired tolerance, and once the error is within the desired tolerance using the adjusted assumed first statistical distributions as the first statistical distributions for determining the second statistical distributions.

4. The method as recited in claim 1, 2 or 3, further comprising classifying an expected magnitude of the second statistical distributions to have a classification that is small, large, or intermediate, and then selecting a determination scheme for determining the second statistical distributions in accordance with the classification.

5. The method as recited in claim 4, wherein, when the classification is small, using a Taylor series expansion to determine the second statistical distributions as linear functions of the selected multiple process parameters.

6. The method as recited in claim 4, wherein, when the classification is large, using an analytical approach to determine the second statistical distributions or, when the classification is intermediate, using an analytical interpolation to determine the second statistical distributions.

7. The method as recited in any preceding claim, further comprising generating the article integrity map for each of a plurality of additive manufacturing machines (20) in order to characterize a manufacturing quality capability of each of the additive manufacturing machines (20).

8. The method as recited in any preceding claim, wherein the defect is a keyhole defect, and the probability of formation of the defect is based upon a probability of Tₜₕᵣₑₛₕ being less than T₀.

9. The method as recited in any of claims 1 to 7, wherein the defect is a lack of fusion defect, and the probability of formation of the defect is based upon a probability of Tₜₕᵣₑₛₕ being greater than T₀.

10. A system comprising a computer-readable storage device (32) having a program with a set of instructions executable to perform the following steps for location-specific probabilistic prediction of formation of a defect in powder bed fusion additive manufacturing of an article (26):
determine first statistical distributions of multiple process parameters selected from laser power, scan speed, laser spot size, and powder layer thickness and density;
based on the first statistical distributions, for locations across the article (26), determine second statistical distributions of a threshold temperature (Tₜₕᵣₑₛₕ) for formation of the defect at each of the locations;
determine a cumulative temperature thermal history (T₀) at each of the locations across the article (26);
for each of the locations across the article (26), determine a probability of formation of the defect based upon a probability of Tₜₕᵣₑₛₕ versus T₀; and
from the probability of formation of the defect at each of the locations, generate an article integrity map.

11. The system as recited in claim 10, wherein the determining of the first statistical distributions is calculated from in-situ measurement of the additive manufacturing of a single track/stripe of powder using at least one of photodiodes, infrared thermography, calorimetry, optical imaging, and acoustic imaging.

12. The system as recited in claim 10 or 11, wherein the determining of the first statistical distributions includes additively manufacturing a specimen that is different from the article (26) or a single track of powder, measuring defects in the specimen or the single track to generate an experimental location specific defect volume, simulating an additive manufacturing of the specimen or the single track based on assumed first statistical distributions to generate a simulated location specific defect volume, comparing the simulated location specific defect volume to the experimental location specific defect volume to determine an error, if the error is outside of a desired tolerance iteratively adjusting the assumed first statistical distributions and re-simulating the additive manufacturing until the error is within the desired tolerance, and once the error is within the desired tolerance using the adjusted assumed first statistical distributions as the first statistical distributions for determining the second statistical distributions.

13. The system as recited in claim 10, 11 or 12, further comprising classifying an expected magnitude of the second statistical distributions to have a classification that is small, large, or intermediate, and then selecting a determination scheme for determining the second statistical distributions in accordance with the classification,
optionally further comprising: when the classification is small, using a Taylor series expansion to determine the second statistical distributions as linear functions of the selected multiple process parameters; or
when the classification is large, using an analytical approach to determine the second statistical distributions; or
when the classification is intermediate, using an analytical interpolation to determine the second statistical distributions.

14. The system as recited in any of claims 10 to 13, further comprising generating the article integrity map for each of a plurality of additive manufacturing machines (20) in order to characterize a manufacturing quality capability of each of the additive manufacturing machines (20).

15. The system as recited in any of claims 10 to 14, wherein the defect is a keyhole defect, and the probability of formation of the defect is based upon a probability of Tₕᵣₑₛₕ being less than T₀, or wherein the defect is a lack of fusion defect, and the probability of formation of the defect is based upon a probability of Tₜₕᵣₑₛₕ being greater than T₀.
